# EUROPÄISCHE PATENTSCHRIFT

(11) **EP 1 673 248 B1**
(45) Veröffentlichungstag und Bekanntmachung des Hinweises auf die Patenterteilung: **02.07.2008**
(21) Anmeldenummer: 04790219.2
(22) Anmeldetag: 08.10.2004
(51) Int. Cl.: B60H 1/00, B62D 21/17, B62D 25/14

(54) **BAUTEIL, INSBESONDERE HYBRIDBAUTEIL FÜR EINEN QUERTRÄGER EINES FAHRZEUGS UND VERWENDUNG EINES BAUTEILS**
STRUCTURAL ELEMENT, PARTICULARLY A HYBRID STRUCTURAL ELEMENT FOR A CROSS MEMBER OF A VEHICLE AND USE OF A STRUCTURAL ELEMENT
ELEMENT CONSTITUTIF, NOTAMMENT ELEMENT HYBRIDE POUR LONGERON DE VEHICULE ET UTILISATION D'UN ELEMENT CONSTITUTIF

(30) Priorität: 08.10.2003 DE 10347230; 02.03.2004 DE 102004010605
(43) Veröffentlichungstag der Anmeldung: 28.06.2006
(73) Patentinhaber: Behr GmbH & Co. KG, 70469 Stuttgart (DE)
(72) Erfinder: WOLF, Walter, 71570 Oppenweiler-Zell (DE)
(86) Internationale Anmeldenummer: PCT/EP2004/011282
(87) Internationale Veröffentlichungsnummer: WO 2005/032866

(56) Entgegenhaltungen:
- DE-A1- 2 914 552
- DE-A1- 4 428 742
- DE-A1- 10 242 805
- DE-C1- 19 834 390
- FR-A- 2 744 090
- FR-A- 2 789 043

## Beschreibung

Die Erfindung bezieht sich auf ein Bauteil, insbesondere ein Hybridbauteil für einen Querträger eines Fahrzeugs. Des Weiteren betrifft die Erfindung die Verwendung eines derartigen Bauteils.

Aus dem Kraftfahrzeugbau sind aus Rohren gebildete Querträger bekannt, die aus Metall bestehen und entsprechend große Wandstärken aufweisen. Die Wandstärken sind dabei für eine ausreichende Form-, Biege-, Knick- und Torsionssteifigkeit sowie für eine ausreichende Druckbelastbarkeit entsprechend dick ausgeführt. Der als Rohr- oder Hohlprofil ausgebildete Querträger eignet sich prinzipiell zur Luftführung, beispielsweise von einer mittig im Frontbereich des Fahrzeugs angeordneten Klimaanlage zu seitlichen Ausströmern hin.

Ein derartiger Querträger ist beispielsweise aus der DE 100 64 522 A1 bekannt. Dabei ist der Querträger zur Gewichtsreduzierung aus einem Leichtbauwerkstoff, insbesondere aus einem Leichtmetall in Art eines Schalenbauteils oder Grundkörpers, gebildet, in welchen für eine hinreichende Steifigkeit und Druckbelastbarkeit des Querträgers ein zumindest einen Kanal bildender Kunststoffkern angeordnet ist. Zum Austritt des Luftstroms ist der Kanal mit Öffnungen für einen Luftabgriff versehen.

Üblicherweise erfolgt dabei an dem jeweiligen Luftabgriff durch ein außen am Bauteil angeordnetes Leit- und Führungselement eine Strömungsführung, insbesondere Umlenkung der Strömung. Dabei wird das Strömungsmedium, z. B. Luft, über eine einzelne große Öffnung oder mehrere Öffnungen in Art eines gelochten Öffnungsbereiches im Grundkörper des Bauteils dem Leit- und Führungselement zugeführt. Dabei kann es im Bereich des Luftabgriffs zu einem harten Ausströmen an der Kante der Öffnung des Grundkörpers kommen, wodurch irreguläre Strömungen verursacht werden können.

Des Weiteren ist aus der FR 2 789 043 ein Trägerelement zur Unterstützung der Instrumententafel bekannt, welches aus zwei Halbschalen zusammengesetzt ist und in seinem Inneren ein luftführendes Kanalbauteil aufnimmt.

Ferner offenbart die FR 2 744 090 ein Armaturenbrett eines Fahrzeugs, welches so geformt ist, dass aus einem mittleren Bereich austretende Luft an die jeweiligen Endbereiche des Armaturenbretts an den Seiten des Fahrzeugs geführt ist.

Der Erfindung liegt daher die Aufgabe zugrunde, ein besonders einfaches Bauteil anzugeben, bei welchem ein besonders gleichmäßiges Ausströmen ermöglicht ist. Des Weiteren ist die Verwendung eines Bauteils anzugeben.

Die Aufgabe wird bezüglich des Bauteils erfindungsgemäß gelöst durch die Merkmale des Anspruchs 1 und bezüglich der Verwendungen eines derartigen Bauteils durch die Merkmale der unabhängigen Ansprüche 25 bis 28.

Vorteilhafte Weiterbildungen der Erfindung sind Gegenstand der Unteransprüche.

Die Erfindung geht dabei von der Überlegung aus, dass bei einem Bauteil, wie einem Hybridbauteil, für einen Querträger eines Fahrzeugs, welches aus einem zumindest teilweise kunststoffausgekleideten Grundkörper mit mindestens einem Strömungsabgriff gebildet ist, ein harmonisches Ausströmen eines durch das Bauteil führten Mediums, z. B. Luft, am Strömungsabgriff ermöglicht sein sollte. Hierzu sollte das Bauteil einen Strömungsabgriff mit einer möglichst weichen Strömungsführung sicherstellen. Dazu ist im Bauteil selbst, insbesondere im Bereich des Strömungsabgriffs, ein Mittel zur Strömungsführung vorgesehen. Durch eine Anordnung eines Mittels zur Strömungsführung im Bereich des Strömungsabgriffs ist ein sicheres und gleichmäßiges Ausströmen durch die Öffnung des Bauteils sichergestellt. Bei einer Verwendung des Bauteils für eine Luftführung einer Klimaanlage in einem Fahrzeug führt das gleichmäßige und weiche Ausströmen der Luft zu einer Verbesserung des Klimakomforts im Fahrzeug.

Hinsichtlich des Bauteils, insbesondere eines Hybridbauteils, für einen Querträger eines Fahrzeugs, weist das Bauteil einen zumindest teilweise kunststoffausgekleideten Grundkörper auf, der aus mindestens zwei Elementen gebildet ist, welche miteinander verbindbar sind, wobei der Grundkörper derart mit Kunststoff innenwandig versehen ist, dass im Bereich des Strömungsabgriffs das Mittel zur Strömungsführung vorgesehen ist. Insbesondere ist der Kunststoff in Art einer Kunststoffstruktur im Grundkörper angeordnet, z.B. angespritzt, angefügt und/oder eingefügt. Dabei weist die Kunststoffstruktur einen gegenüber dem Querschnitt des Grundkörpers kleineren Querschnitt auf. Vorteilhafterweise kann der teilweise mit Kunststoff ausgekleidete Grundkörper zumindest bereichsweise perforiert ausgebildet sein. Zweckmäßigerweise erfolgt dies beispielsweise in einem Öffnungsbereich. Ein derartiger Grundkörper hat insbesondere den Vorteil, Gewicht zu sparen und/oder die Struktur zu verstärken.

Zweckmäßigerweise ist das Mittel zur Strömungsführung als ein Glättungselement ausgebildet. Bei einer besonders einfachen Ausführungsform ist das Mittel zur Strömungsführung, insbesondere das Glättungselement, aus einer Kunststoffstruktur variierender Dicke gebildet. Mit anderen Worten: Das Glättungselement ist durch den Kunststoff des Grundkörpers selbst gebildet, indem im Bereich des Strömungsabgriffs die Kunststoffauskleidung oder die Kunststoffstruktur eine variierende Dicke aufweist. Beispielsweise weist die Kunststoffstruktur eine Dicke von 1 mm bis 10 mm, insbesondere von 2 mm bis 6 mm auf. Des Weiteren kann die Kunststoffstruktur zumindest bereichsweise mehrschichtig, insbesondere aus einer Hart-Weich-Schichtenkombination, für eine Akustikverbesserung ausgeführt sein.

Bei einer möglichen Ausführungsform des Glättungselements ist die Kunststoffstruktur durch eine gewölbte Verdickung im Strömungsabgriff gebildet. Durch eine derartige Wölbung im Bereich des Strömungsabgriffs, insbesondere im Bereich der Öffnung zum Ausströmen, ist eine weiche Strömungsführung sichergestellt.

Alternativ oder zusätzlich ist das Mittel zur Strömungsführung als ein Umlenkelement ausgebildet. Zusätzlich zu einer möglichst weichen Strömungsführung ist hierdurch eine Strömungsumlenkung, z. B. in Richtung der Öffnung zum Ausströmen, sichergestellt. Bei einer möglichen Ausführungsform erstreckt sich ein Umlenkelement aus einer innenwandigen Kunststoffschicht bogenförmig, insbesondere in Art einer Zunge, in den Hohlraum des Grundkörpers, so dass das Umlenkelement weitgehend senkrecht zur Strömungsrichtung, insbesondere nach oben oder unten, verläuft und eine Umlenkung der Strömung bewirkt. Alternativ kann das Umlenkelement in Längsrichtung des Grundkörpers gesehen vertikal verlaufen und sich dann seitlich bogenförmig erstrecken, so dass das Umlenkelement quer zur Strömungsrichtung, insbesondere seitlich, verläuft und eine Umlenkung der Strömung zur Seite bewirkt. Je nach Ausführungsform kann das Umlenkelement zum einen als ein separates Modul ausgebildet sein, welches an die Kunststoffschicht anfügbar ist. Zum anderen können die Kunststoffschicht und das Umlenkelement als ein Modul, insbesondere ein Kunststoffmodul in Art einer Kunststoffstruktur, ausgeführt sein.

Je nach Ausführung des Bauteils, insbesondere dessen Grundkörpers, z. B. bei einer Ausführung als ein Mehrkammerkanal zum Führen mehrerer Strömungsmedien, können mehrere Umlenkelemente in Längsrichtung gesehen parallel nebeneinander im Grundkörper, insbesondere im Bereich des Strömungsabgriffs, angeordnet sein. Die Umlenkelemente bilden in dieser Ausführungsform eine Trennwand zwischen den einzelnen Kammern der Kanäle.

Das Mittel zur Strömungsführung ist als ein kombiniertes Führungs- und Aussteifungselement ausgebildet. Hierdurch ist neben einer weichen Strömungsführung und einer möglichen Strömungsumlenkung zusätzlich eine den Grundkörper hinreichend gute Aussteifung, insbesondere eine hinreichend gute Torsions-, Biege- und Knicksteifigkeit, sichergestellt. Dazu ist das kombinierte Führungs- und Aussteifungselement aus einem Kanalelement, einem in dem Kanalelement angeordneten Umlenkelement und mindestens einem von dem Kanalelement gegen den Grundkörper abgestützten Aussteifungselement gebildet. Dabei weist das Kanalelement in Richtung des Strömungsabgriffs gesehen einen abnehmenden Querschnitt auf, wobei das Aussteifungselement in Art von Querrippen im zwischen dem Kanalelement und dem Grundkörper gebildeten Hohlraum angeordnet ist. Der Winkel der Querrippen kann dabei senkrecht zum Kanal oder schräg mit einem Winkel von 0° bis +/- 60° verlaufen. D.h. die Rippen stehen zueinander parallel oder bilden max. einen Winkel von 120°, vorzugsweise von 90° oder 0°.

Je nach Ausführungsform des kombinierten Führungs- und Aussteifungselements kann sich das Umlenkelement aus dem Kanalelement bogenförmig, insbesondere zungenartig, erstrecken und dieses im Bereich des Strömungsabgriffs endseitig des kombinierten Führungs- und Aussteifungselements verschließen, wobei das Umlenkelement in die Ausströmöffnung des Grundkörpers mündet. Dies möglichst ohne dabei Stoßkanten für ein strömendes Medium zu bilden.

Je nach Herstellungsverfahren für das Bauteil ist das Mittel zur Strömungsführung zumindest teilweise oder vollständig separat ausgebildet und in den Grundkörper einfügbar. Alternativ kann das Mittel zur Strömungsführung zusammen mit der Kunststoffauskleidung des Grundkörpers in einem Verfahrensschritt in einem so genannten Ein- oder Mehrkomponenten-Spritzgussverfahren eingebracht und als eine Kunststoffstruktur geformt werden. Die Elemente sind vorzugsweise so gestaltet, dass einfache Auf-Zu-Werkzeug verwendet werden können.

Vorzugsweise sind mehrere Mittel zur Strömungsführung, insbesondere ein Glättungselement, ein Umlenkelement und/oder ein kombiniertes Führungs- und Aussteifungselement, in einem einzelnen Strömungsabgriff angeordnet. Beispielsweise ist der Grundkörper in Längsrichtung gesehen mit mehreren voneinander beabstandeten Strömungsabgriffen versehen. Hierdurch kann beispielsweise bei einem Fahrzeug der Fahrzeuginnenraum mehrfach, z. B. im Frontscheiben-, Seitenscheiben-, Front- und/oder Fußbereich, mit Luft beströmt werden. Alternativ oder zusätzlich kann der Grundkörper in Querrichtung gesehen mit gegenüberliegenden Strömungsabgriffen versehen sein. Hierdurch ist ein Ausströmen des Mediums nach oben und/oder nach unten je nach Anordnung des Bauteils ermöglicht. Bei einem beispielsweise aus zwei Halbschalen zusammengesetzten Bauteil kann dabei der .Strömungsabgriff schalenübergreifend, d. h. in der Trennebene der beiden Halbschalen, und/oder schalenbezogenen, d. h. in der jeweiligen Halbschale selbst, angeordnet sein.

Für eine möglichst gute Tragstruktur und Tragkonstruktion des Bauteils wird der Grundkörper zweckmäßigerweise zumindest partiell, insbesondere entlang seiner Längsausdehnung, vom Kunststoff beschichtet, insbesondere umspritzt. Alternativ oder zusätzlich kann der Kunststoff separat vorgeformt und anschließend in den Grundkörper eingefügt werden. Vorzugsweise wird der Grundkörper innen- und/oder außenseitig mit Kunststoff versehen. Auch wird der Kunststoff bevorzugt ein- oder mehrschichtig und/oder mit bereichsweise variierender Dicke aufgebracht. Für eine möglichst gute Biege-, Beulsowie Torsionssteifigkeit des Bauteils wird der Kunststoff vorzugsweise formschlüssig und flächig aufgebracht. Die Kunststoffschicht bewirkt neben einer guten Struktursteifigkeit auch eine thermische Isolierung und/oder Schallisolierung bei einer als Kanal ausgeführten Kunststoffstruktur, welche von einem gasförmigen oder flüssigen Medium durchströmt wird. Zusätzlich kann eine der Kunststoffschichten mit einer Verstärkung, insbesondere mit einem Verstärkungsgewebe, mit Fasern, Kugeln oder anderen Materialien, z. B. einem Glasfasergewebe, versehen werden. Zur besseren thermischen und akustischen Isolation kann die Kunststoffschicht aufgeschäumt ausgebildet sein. Dabei wird PU-Schaum, Hart oder Weich-Schaum, Integralschaum, physikalisch oder chemisch aufgeschäumt (TSG Thermoplastischer Schaum-Spritzguß, Mucell-Verfahren, etc.) oder mehrschichtig ausgeführt, wobei einzelne Schichten unterschiedliche Dichten aufweisen können.

Vorzugsweise wird ein aus einem Metall und/oder Leichtmetall, insbesondere Aluminium, Magnesium, Titan oder Feinstahl, gebildeter Grundkörper mit einer Wanddicke von 0,4 mm bis 1,5 mm, bis 2,0 mm oder, insbesondere abhängig von der Festigkeit des Materials, auch bis 3,0 mm verwendet. Je nach Art und Funktion des Bauteils kann der Grundkörper mit bereichsweise variierender Wanddicke geformt werden. Beispielsweise kann bei einer Verwendung des Bauteils als Querträger dieser im Bereich von Halterungen und Krafteinleitungsstellen im Fahrzeug, z. B. im Bereich einer Anbindung an eine A-Säule, im Lenkungsbereich, im Anbindungsbereich einer Klimaanlage oder bei so genannten Front-End-Bauteilen in den Bereichen der Längsträger, der Motorlager oder des Haubenschlosses, mit einer dickeren Wandstärke ausgebildet sein als im Bereich, in dem das Bauteil lediglich als Luftführungskanal, als Montageträger oder für andere Funktionen dient. Solche für den Grundkörper verwendete Bleche sind als "Tailored Blanks" (bereichsweise zusammengeschweißt), "Tailored rolled Blanks" (gewalzt mit unterschiedlicher Dicke in Walzrichtung), "Profiliertes Band" (z. B. Rand dick, Mitte dünn) oder als "Patch-Work-Bleche" (wie bei einem Puzzle, jedoch jedes Teil mit unterschiedlicher Wandstärke zur Platine gefügt) verfügbar. Ein derartiger metallischer Grundkörper oder ein solches Blechteil ist besonders kostengünstig und für einen auf Gewichtsreduzierung ausgelegten Leichtbau im Fahrzeugbau besonders geeignet.

Bevorzugt wird das oben beschriebene Bauteil als Instrumententafelträger in einem Fahrzeug verwendet, wobei der Kunststoffkern oder die Kunststoffstruktur einen oder mehrere Kanäle, insbesondere einen Luftführungskanal und/oder einen Kabelkanal, bildet. Alternativ kann ein derartiges Bauteil als Querträger in einem Fahrzeug, insbesondere als Querträger zwischen den A-Säulen eines Fahrzeugs, verwendet werden.

Die mit der Erfindung erzielten Vorteile bestehen insbesondere darin, dass durch ein im Bereich des Strömungsabgriffs angeordnetes Mittel zur Strömungsführung ein weiches Ausströmen des Strömungsmediums ermöglicht ist, so dass der Klimakomfort im Ausströmungsbereich erhöht ist. Zudem ist das Bauteil mit einem besonders einfachen Werkzeug herstellbar. Ebenfalls kann in anderen Bereichen der Strömungsführung die Funktion der Luftführung von der Statikfunktion des Grundkörpers bei Bedarf abgekoppelt werden. Dadurch lassen sich Umlenkungen weicher und größer ausführen.

Ausführungsbeispiele der Erfindung werden anhand einer Zeichnung näher erläutert. Darin zeigen:
- Figur 1: schematisch eine Ausführungsform für ein Bauteil, insbesondere für einen Halbkörper des Bauteils, mit einem Strömungsabgriff und einem darin angeordneten Mittel zur Strömungsführung,
- Figur 2: schematisch eine alternative Ausführungsform für ein Mittel zur Strömungsführung,
- Figuren 3A bis 3C: schematisch eine perspektivische Ansicht eines Bauteils mit einem zumindest teilweise mit Kunststoff ausgekleideten Grundkörper mit mehreren Strömungsabgriffen und Mitteln zur Strömungsführung,
- Figuren 4 bis 6: schematisch verschiedene Ausführungsformen eines Bauteils, insbesondere für einen Halbkörper des Bauteils, mit einem Strömungsabgriff und einem darin angeordneten Mittel zur Strömungsführung,
- Figur 7: schematisch in perspektivischer Ansicht ein geschlossenes Bauteil mit einem Strömungsabgriff und einem darin angeordneten Mittel zur Strömungsführung, und
- Figur 8: schematisch im Querschnitt ein Bauteil mit einem im Bereich eines Strömungsabgriffs angeordneten Mittel zur Strömungsführung.

Einander entsprechende Teile sind in allen Figuren mit den gleichen Bezugszeichen versehen.

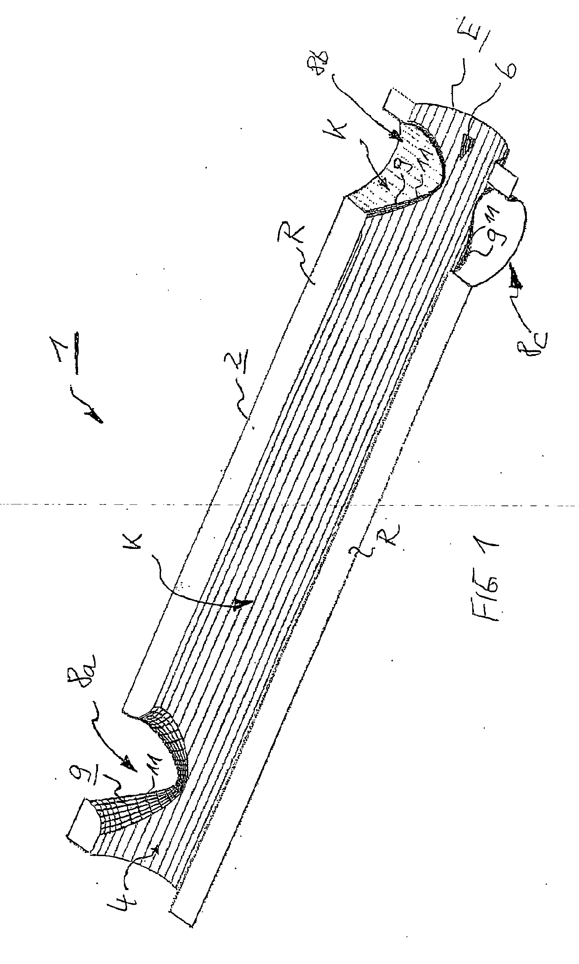

Figur 1 zeigt in Draufsicht ein Element E eines Bauteils 1, z. B. eines Querträgers zum Anordnen zwischen nicht näher dargestellten A-Säulen eines nicht näher dargestellten Fahrzeugs.

Das Bauteil 1 ist beispielsweise aus mindestens zwei Elementen E gebildet, von denen in Figur 1 ein unteres Element E, z. B. ein Halbkörper oder eine Halbschale, dargestellt ist. Das obere, nicht näher dargestellte Element ist korrespondierend zum unteren Element E als ein Halbkörper oder eine Halbschale ausgeführt. Das Bauteil 1 weist einen Grundkörper 2 auf, der bevorzugt aus Blech, insbesondere aus einem Leichtmetall-Blech, z. B. aus Aluminium-Blech oder Magnesium-Blech, oder aus Feinstahl-Blech, gebildet ist. Der Grundkörper 2 ist im Ausführungsbeispiel im geschlossenen Zustand, d. h. bei Aufeinanderliegen der beiden Elemente E, als Hohlprofil, insbesondere als ein rohrartiges Hohlprofil, ausgeführt. Alternativ kann der Grundkörper 2 auch als ein Hohlprofil mit einem kastenartigen Querschnitt ausgeführt, und/oder zumindest bereichsweise perforiert ausgebildet sein. In einer möglichen Ausführungsform mit kastenförmigem Querschnitt ist der Grundkörper 2 aus zwei Elementen E, z.B. einem U-Profil oder einer Unterschale und einem Deckel, gebildet.

Alternativ kann der Grundkörper 6 auch als ein Hohlprofil mit einem kastenartigen Querschnitt ausgeführt sein und/oder zumindest bereichsweise perforiert ausgebildet sein.

Der Grundkörper 2 ist innenseitig mit Kunststoff 4 versehen, der eine Kunststoffstruktur K bildet. Der Kunststoff 4 kann dabei in Art einer Kunststoffauskleidung angefügt, eingefügt oder angespritzt sein. Der zumindest teilweise mit dem Kunststoff 4 ausgekleidete Grundkörper 2 dient im geschlossenen Zustand als Kanal 6, insbesondere als ein Strömungs- und/oder Führungskanal zum Führen einer Strömung bzw. zum Führen von Kabeln oder anderen Komponenten.

Für eine möglichst gute Nutzung des mittels der Kunststoffstruktur K gebildeten Kanals 6 zur Führung eines Mediums, z.B. von Luft zur Klimatisierung eines Fahrzeuginnenraums oder alternativ von Leitungen oder Kabeln, sind die beiden Elemente E über Ränder R hinreichend fest miteinander zu verbinden. Die Ränder R bilden dabei die Trennebene zwischen zwei Elementen E. Dazu werden die Elemente E im geschlossenen Zustand des Grundkörpers 2 an übereinander liegenden Rändern R miteinander mechanisch und/oder stoffschlüssig verbunden. Dabei kann der Grundkörper 2 durch Verstemmen an den aneinander liegenden Rändern R der Elemente E genietet, geschraubt, geschweißt, geklebt, gebördelt, verstemmt, geclincht oder in ähnlicher Weise verbunden sein. Zusätzlich kann der Grundkörper 2, insbesondere dessen zwei Elemente E, an den Rändern R an nicht näher dargestellten Öffnungen, z.B. Auskragungen, über den Kunststoff 4 zusammengehalten werden. Dabei ist der Kunststoff 4 an den Grundkörper 2 gefügt und über eine beispielsweise durch ein Thermoverfahren bewirkte Eigenhaftung mit dem Grundkörper 2 verbunden.

Die aus dem Kunststoff 4 gebildete Kunststoffstruktur K dient in Art einer Kunststoffauskleidung unter anderem der Erhöhung der Steifigkeit des Grundkörpers 2. Der besonders dünnwandig ausgebildete Grundkörper 2 führt beim Durchströmen mit Luft zu einer Geräuschentwicklung, welche besonders vorteilhaft durch Auskleidung des Grundkörpers 2 mit dem Kunststoff 4 gedämpft wird. D.h. der Kunststoff 4 übernimmt eine Schallisolierung und ggf. auch eine thermische Isolierung.

Für ein Ausströmen des im Kanal 6 geführten Mediums, z.B. in einen Fahrzeuginnenraum, weist der Grundkörper 2 mindestens einen Strömungsabgriff 8a bis 8c auf. In der Figur 1 sind drei Strömungsabgriffe 8a bis 8c gezeigt. Im Bereich des jeweiligen Strömungsabgriffs 8a bis 8c ist für ein harmonisches Ausströmen des Mediums ein Mittel 9 zur Strömungsführung vorgesehen. Die in der Figur 1 dargestellten Mittel 9 zur Strömungsführung sind dabei als Glättungselemente 11 ausgeführt, indem die Kunststoffstruktur K im Bereich des jeweiligen Strömungsabgriffs 8a oder 8b eine variierende Dicke aufweist, so dass eine weiche bzw. harte Strömungsführung bewirkt ist. Mit anderen Worten: Die Dicke der Kunststoffstruktur K oder die Dicke des Kunststoffs 4 ist ortsabhängig an ein vorgegebenes Strömungsprofil im Bereich des betreffenden Strömungsabgriffs 8a bis 8c angepasst. Die Kunststoffstruktur K weist eine Dicke von 0,1 mm bis 10 mm, insbesondere von 2 mm bis 6 mm auf. Die Kunststoffstruktur K kann dabei bereichsweise auch mehrschichtig ausgeführt sein. Je nach Art der Strömungsführung - weiche oder harte Strömungsführung - im Bereich des jeweiligen Strömungsabgriffs 8a bzw. 8b, 8c weist die betreffende Kunststoffstruktur K eine größere Dicke von 4 mm bis 6 mm in Form einer gewölbten Verdickung oder eine kleinere Dicke von 2 mm bis 4 mm in Form einer abgeflachten oder leicht abgerundeten Verdickung auf. Alternativ können anstelle von Verdickungen oder Ausdünnungen unterschiedlich große Radien im Bereich des jeweiligen Strömungsabgriffs 8a bis 8c gewählt werden.

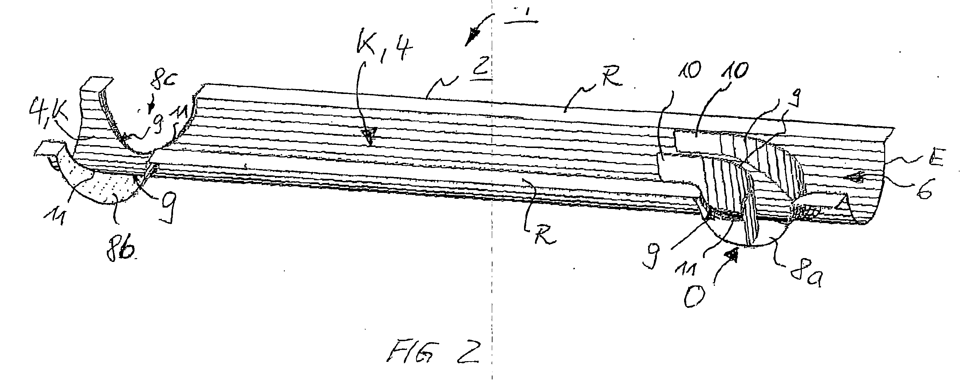

Alternativ oder zusätzlich kann im Bereich des jeweiligen Strömungsabgriffs 8a als weiteres Mittel 9 zur Strömungsführung mindestens ein Umlenkelement 10 angeordnet sein, wie dies in der Figur 2 dargestellt ist. Je nach Art und Ausführung des Umlenkelements 10 kann dieses als ein separates Kunststoffmodul ausgebildet sein, welches an die Kunststoffstruktur K angefügt wird. Alternativ kann das Umlenkelement 10 mit der Kunststoffstruktur K oder der Kunststoffschicht als ein Modul, welches in einem so genannten Ein- oder Mehrkomponenten-Spritzgussverfahren eingebracht wird, ausgeführt sein. Wie in Figur 2 dargestellt, können in Längsrichtung des Bauteils 1 gesehen mehrere Umlenkelemente 10 parallel nebeneinander angeordnet sein, welche jeweils getrennt in den betreffenden Strömungsabgriff 8a in eine Öffnung O des Grundkörpers 2 münden. Die Umlenkelemente 10 weisen zur Umlenkung des in Längsrichtung im Kanal 6 geführten Mediums in Richtung der Öffnung O einen bogenförmigen Verlauf auf, so dass das Medium in Richtung der Öffnung O umgelenkt und dort ausgeströmt wird. Zusätzlich ist durch die Kunststoffstruktur K mit einer leicht gewölbten Verdickung (=Glättungselement 11) im Bereich des Strömungsabgriffs 8a ein harmonisches Ausströmen des Mediums durch die Öffnung O bewirkt. Das äußerste Umlenkelement 10 kann gleichzeitig als Verschluss des Kanalendes dienen.

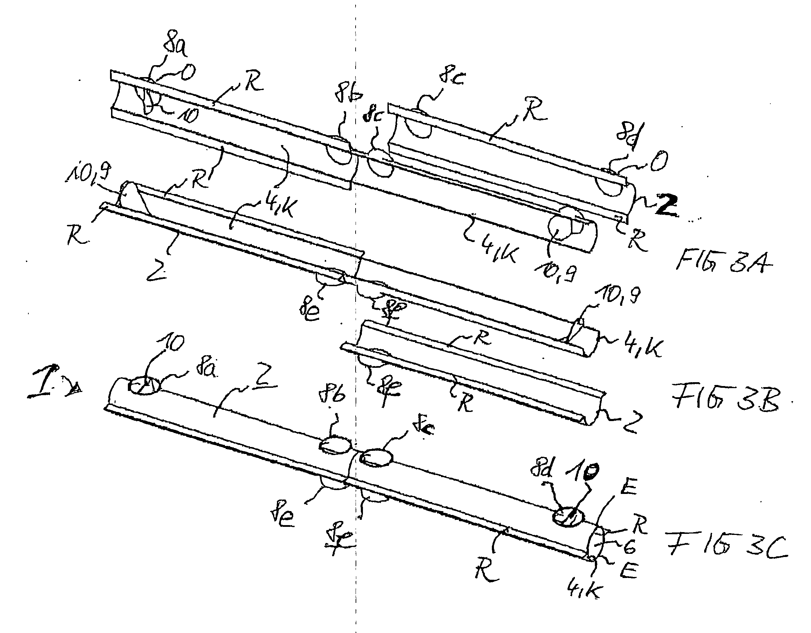

Die Umlenkelemente 10 sind des Weiteren vertikal im Grundkörper 2, insbesondere im jeweiligen Element E, angeordnet, so dass der Kanal 6 mittels der Umlenkelemente 10 in Art von Trennwänden in mehrere Kammerkanäle unterteilt wird. Eine derartige Ausführungsform wird beispielsweise bei einem als ein so genannter Mehrkammerkanal ausgebildeten Kanal 6, in welchem mehrere Medien, z.B. Frischluft, Kaltluft und/oder Warmluft, geführt werden, verwendet. Die unterschiedlichen Medien können dann beim Ausströmen gemischt werden. Die unterschiedlichen Kammern können auch zu unterschiedlichen Austritten führen. Das korrespondierende obere Element E des Grundkörpers 2 ist, wie in den Figuren 3A bis 3C näher dargestellt, entsprechend ausgebildet.

Die Figuren 3A und 3B zeigen das Bauteil 1 im geöffneten Zustand, wobei die Figur 3A das obere Element E des Bauteils 1 und die innenseitig am oberen Element E angefügte, eingefügte bzw. angespritzte Kunststoffstruktur K und die Figur 3B das korrespondierende untere Element E und die innenseitige Kunststoffstruktur K zeigen. Figur 3C zeigt das Bauteil 1 im geschlossenen Zustand mit den sechs Strömungsabgriffen 8a bis 8f, wobei in den Strömungsabgriffen 8a und 8d Umlenkelemente 10 zur Strömungsumlenkung angeordnet sind. Wie in den Figuren 3A und 3B gezeigt, erstreckt sich dabei das jeweilige Umlenkelement 10 aus der innenwandigen Kunststoffschicht oder -struktur K bogenförmig, insbesondere in Art einer Zunge, in den Hohlraum, insbesondere in den Kanal 6, des Grundkörpers 2. Hierdurch wird der Kanal 6 endseitig verschlossen und das Medium mittels des Umlenkelements 10 in Richtung der Öffnung O umgelenkt. Je nach Anordnung der Strömungsabgriffe 8a bis 8f sind diese wie dargestellt schalenbezogen angeordnet. Alternativ oder zusätzlich können diese auch schalenübergreifend in der Trennebene zwischen zwei Elementen E angeordnet sein.

Der Grundkörper 2 ist als Hohlzylinder ausgeführt, der aus den zwei halbschaligen Elementen E gebildet ist. Die beiden halbschaligen Elemente E bilden einen kreisförmigen Querschnitt und weisen Auskragungen auf, die die Ränder R für eine mechanische und/oder stoffschlüssige Verbindung bilden. Alternativ kann das Bauteil 1 in nicht näher dargestellter Art und Weise einen weitgehend kastenförmigen Querschnitt aufweisen oder nahezu beliebige andere Querschnitte aufweisen. Darüber hinaus können die Elemente E über den Kunststoff 4 selbst mittelbar verbunden werden.

Je nach Art und Ausführung des Bauteils 1 kann das jeweilige Element E mit der zugehörigen halbförmigen Kunststoffstruktur K ein einzelnes vorfertigbares Teil bilden. Dazu wird im Bereich der Schalenform des jeweiligen Elements E der Kunststoff 4 eingespritzt, eingefügt oder angefügt, so dass der Grundkörper 2 zumindest partiell mit einer Kunststoffschicht in Form der Kunststoffstruktur K ausgekleidet wird, insbesondere umspritzt oder umschäumt wird. Der Kunststoff 4 wird dazu beispielsweise über mindestens einen nicht näher dargestellten Kanal mit einem vorgegebenen Einspritzdruck in das Formgebungs- und Fügewerkzeug zur ein- oder beidseitigen und vollständigen oder partiellen Beschichtung des Grundkörpers 2, beispielsweise in einem Spritzgussverfahren, insbesondere in einem Ein- oder Mehrkomponenten-Spritzgussverfahren bei ein- oder beidseitig bzw. vollständig beschichtetem Bauteil 1, eingebracht. Alternativ und abhängig von der Art des Kunststoffs 4 kann dieser auch eingeschäumt, eingegossen oder in ähnlicher Weise eingebracht sein.

Die Kunststoffschicht oder der Kunststoff 4 weist unabhängig von der Art und Weise der Auskleidung - in eingespritzter oder angefügter Form - je nach Vorgabe eine Dicke von 0,1 mm bis 10 mm auf, vorzugsweise zwischen 0,8 mm und 6 mm. Der Grundkörper 2 kann innen- und/oder außenseitig mit einer Kunststoffschicht 4 versehen sein. Darüber hinaus kann durch Einbringen von Kunststoff in mehreren Phasen dieser ein- oder mehrschichtig an den Grundkörper 2 angeformt werden. Die vorgefertigten Elemente E des metallischen Grundkörpers 2 mit der Kunststoffstruktur K werden anschließend zum Bauteil 1 gemäß Figur 3C zusammengebaut.

Für ein möglichst leichtes Bauteil 1, welches zudem besonders einfach formbar ist, ist der metallische Grundkörper 2 bevorzugt aus einem aus Leichtmetall, insbesondere Aluminium oder Magnesium oder aus Feinstahl, gebildeten Grundkörper 2 mit einer Wanddicke von 0,4 mm bis 2,0 mm oder bis 3,0 mm gebildet. Bevorzugt wird der Grundkörper 2 mit bereichsweise variierender Wanddicke geformt, so dass an das Bauteil 1 abschnittsweise weitere Elemente, z.B. eine Lenkung, eine Klimaanlage, Luftein- und/oder Luftauslässe, integriert werden können.

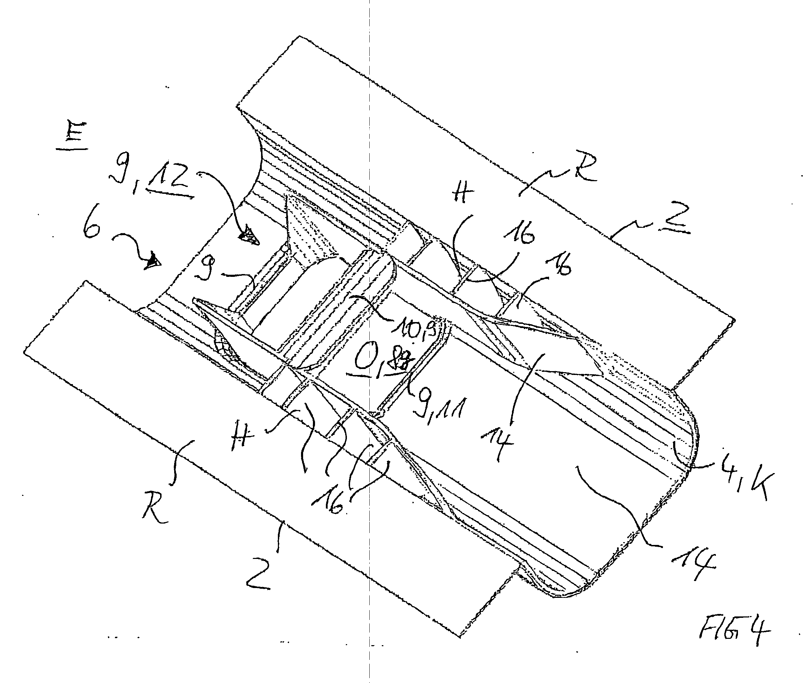

Figuren 4 bis 6 zeigen in Draufsicht jeweils ein Element E, z.B. ein unteres oder ein oberes Element E des Bauteils 1, mit einem im Bereich eines Strömungsabgriffs 8g als Mittel 9 zur Strömungsführung angeordneten kombinierten Führungs- und Versteifungselement 12. Dabei ist das kombinierte Führungs- und Versteifungselement 12 aus einem Kanalelement 14, z.B. einem Luftführungskanal, einem in dem Kanalelement 14 angeordneten Umlenkelement 10 und mindestens einem von dem Kanalelement 14 gegen den Grundkörper 2 abgestützten Aussteifungselement 16 gebildet. Beispielsweise ist dazu die Kunststoffstruktur K als Strömungsstruktur und Leit- sowie Führungsstruktur mit entsprechenden Umleitungsformen kombiniert mit einer Aussteifungsstruktur in Form einer Innenverrippung ausgeführt.

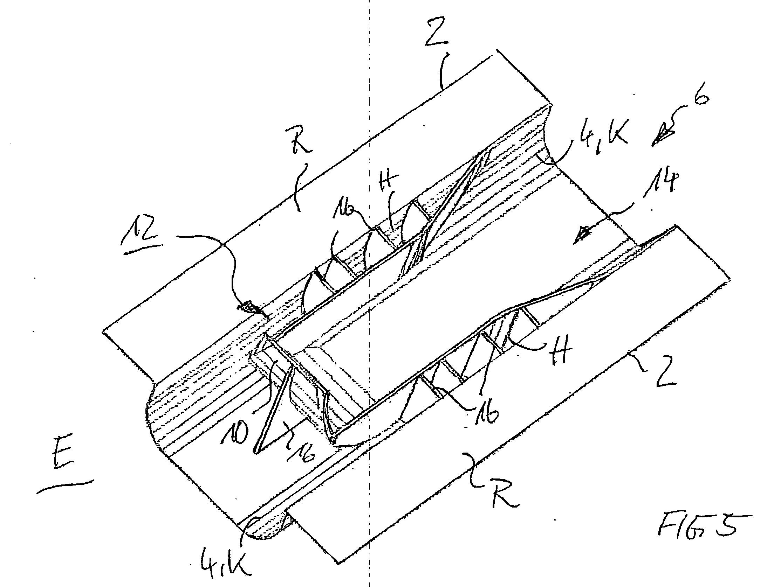

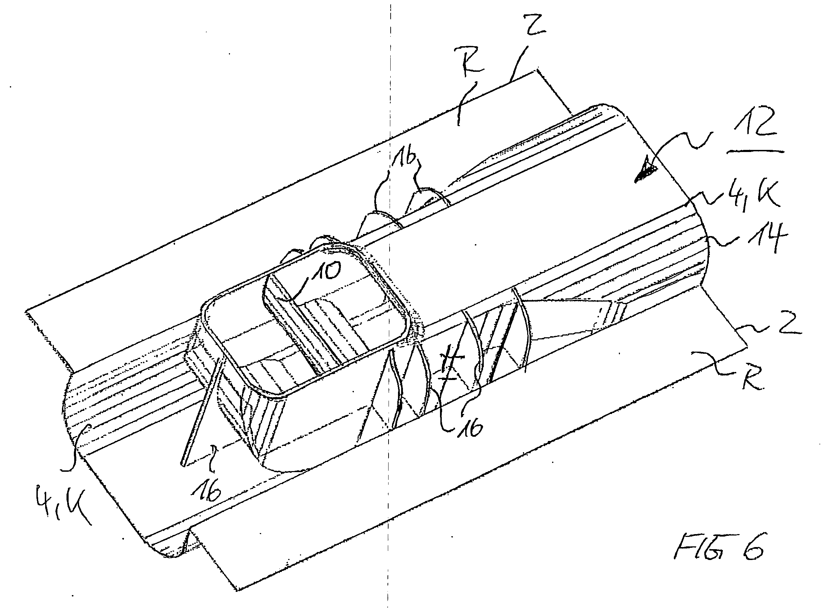

Das Kanalelement 14 weist dabei einen in Richtung des betreffenden Strömungsabgriffs 8g gesehen abnehmenden Querschnitt auf. Das Umlenkelement 10 erstreckt sich aus dem Kanalelement 14. Je nach Ausführungsform des Strömungsabgriffs 8g, z.B. ein- oder mehrkanalig, verschließt das Umlenkelement 10 beispielsweise bei einem einkanaligen Strömungsabgriff 8g den Kanal 6 endseitig und mündet in die Öffnung O des Bauteils 1, wie in Figur 5 dargestellt. In Figur 4 und 6 ist jeweils ein mehrkanaliger Strömungsabgriff 8g dargestellt, wobei das Umlenkelement 10 die Öffnung O in Art einer Trennwand in zwei Ausströmkanäle unterteilt.

Die Versteifungselemente 16 sind in Art von Querrippen in einem zwischen dem Kanalelement 14 und dem Grundkörper 2 gebildeten Hohlraum H angeordnet. Der Winkel der Querrippen kann dabei senkrecht zum Kanal 6 oder schräg mit einem Winkel von 0° bis +/- 60° verlaufen. D.h. die Rippen stehen zueinander parallel oder bilden max. einen Winkel von 120°, vorzugsweise von 90° oder 0°. Ein mit einer derartigen Kunststoffstruktur K versehener Grundkörper 2 ermöglicht eine besonders gute Formsteifigkeit und Formstruktur, so dass bei einem dünnwandigen Grundkörper 2 diesem durch eine entsprechend geformte Kunststoffstruktur K eine hinreichend gute Form- und Beulfestigkeit gegeben ist.

In den Figuren 4 und 5 ist jeweils ein halboffenes Kanalelement 14 gezeigt, welches durch das zu dem betreffenden Element E des Bauteils 1 korrespondierende andere Element E, welches ebenfalls mit einem halboffenen Kanalelement 14 versehen ist, im geschlossenen Zustand des Bauteils 1 - bei aufeinander angeordneten Elementen E - einen geschlossenen Kanal 6, insbesondere einen Strömungskanal bildet. In Figur 6 ist alternativ dazu ein kombiniertes Führungs- und Versteifungselement 12 mit einem geschlossenen Kanalelement 14 dargestellt. Dabei ist das kombinierte Führungs- und Versteifungselement 12 entweder beispielsweise als ein separates Modul vorfertigbar, welches in den metallischen Grundkörper 2 eingefügt oder angefügt wird oder die jeweiligen Hälften sind in den jeweiligen Grundkörper 2 angebracht.

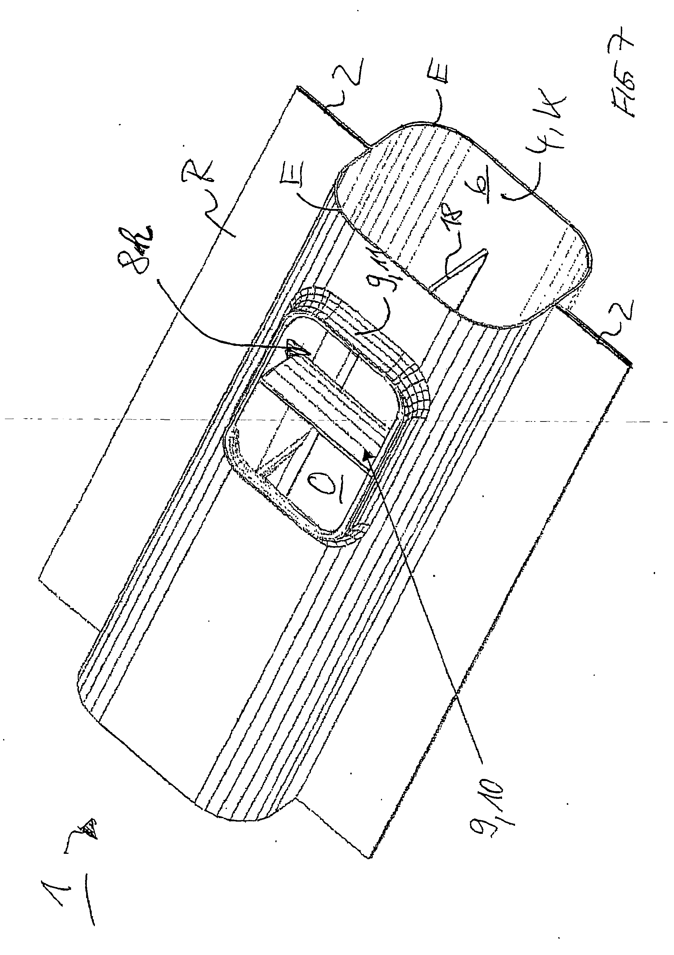

Figur 7 zeigt eine weitere Ausführungsform für einen Strömungsabgriff 8h mit mehreren Mitteln 9 zur Strömungsführung - einem Umlenkelement 10 und einem Glättungselement 11 (=gewölbte Verdickung der Kunststoffstruktur K im Randbereich der Öffnung O). Ein Abschlusselement 18 dient dabei als Verstärkungsrippe für den Kanalabschluss. Alternativ oder zusätzlich kann das Abschlusselement 18 auch als eine Art Trennwand oder Trennelement dienen. Dabei wird dann der Kanal 6 durch das in Längsrichtung des Bauteils 1 verlaufende Trennelement als ein Mehrkammerkanal ausgeführt. Dazu müsste das Trennelement in der Teilungs- oder Trennebene der beiden Halbschalen liegen, damit zwei Kanalaustritte entstehen. Somit werden am Strömungsabgriff 8e mittels des Umlenkelements 10 zwei Strömungsmedien in Richtung der Öffnung O geführt, wo diese dann gemischt werden können. Das Umlenkelement 10 stellt für einen Einkammerkanal ein Umlenk- und Leitelement dar, damit nach der Umlenkung eine möglichst homogene Luftmengen- und Geschwindigkeitsverteilung über den Querschnitt vorliegt. Ohne das Umlenkelement 10 wäre im äußeren Bereich der Massenstrom überproportional hoch, an der inneren Kante könnten ggf. sogar Rückströmungen auftreten.

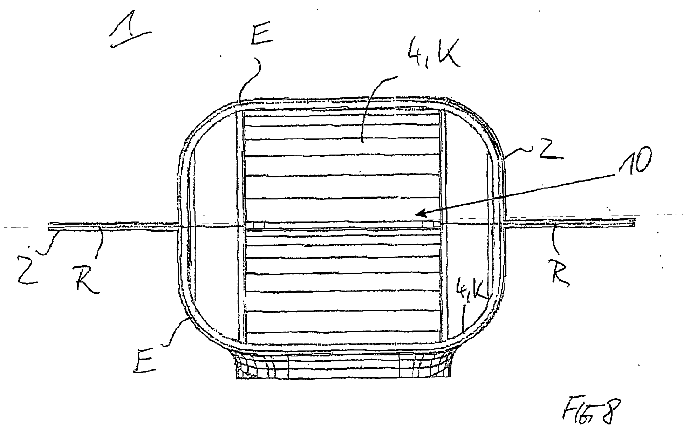

Figur 8 zeigt eine mögliche Ausführungsform des Bauteils 1 im Querschnitt im Bereich einer der Strömungsabgriffe 8a bis 8h mit einem darin angeordneten Umlenkelement 10.

Das Bauteil 1 dient beispielsweise als Instrumententafelträger für eine Klima- und/oder Heizungsanlage. Alternativ kann das Bauteil 1 als ein unter einer Windschutzscheibe angeordneter Querträger in einem Fahrzeug dienen, welcher als Luftführungskanal zur Klimatisierung des Fahrzeuginnenraums und zur Enteisung der Windschutz- oder Frontscheibe vorgesehen ist. Der Grundkörper 2 ist dazu mit mehreren in Längsrichtung gesehen in Abstand zueinander angeordneten Strömungsabgriffen 8a bis 8h mit Öffnungen O zum Ein- und/oder Austritt eines im Kanal 6 geführten Mediums, z. B. Luft, versehen. Selbstverständlich kann die Anzahl und Anordnung der Ein- und Austritte beliebig variiert werden. Ferner kann ein Ein- oder Austritt auch im Bereich der Ränder R erfolgen und sowohl nur in einer Schale des Grundkörpers 2 als auch über beide Schalen sich erstrecken.

Im Weiteren kann ein solches Bauteil 1 auch an anderen Stellen in einem Fahrzeug eingesetzt werden. Beispiele sind: A-, B-, C-, D-Säulen, Längsträger, Fahrzeugschweller, Dachholme, etc. Auch durch diese Bauteile 1 kann Luft einer Klimaanlage (kurz HVAC genannt) Platz sparend geführt und verteilt werden, wobei das Bauteil 1 als Strukturteil im Fahrzeug, insbesondere als Hohlstrukturteil, ausgeführt ist.

### Bezugszeichenliste

- 1: Bauteil
- 2: Grundkörper
- 4: Kunststoff
- 6: Kanal
- 8a bis 8h: Strömungsabgriffe
- 9: Mittel zur Strömungsführung
- 10: Umlenkelement
- 11: Glättungselement
- 12: kombinierte Führungs- und Aussteifungselement
- 14: Kanalelement
- 16: Aussteifungselement
- 18: Trennelement

- E: Elemente
- H: Hohlraum
- K: Kunststoffstruktur
- O: Öffnung
- R: Rand

## Patentansprüche

1. Bauteil (1), insbesondere Hybridbauteil, für einen Träger eines Fahrzeugs, umfassend einen zumindest teilweise mit Kunststoff (4) ausgekleideten Grundkörper (2), der mit mindestens einem Strömungsabgriff (8a bis 8e) versehen ist, **dadurch gekennzeichnet, dass** der Grundkörper (2) im Bereich des Strömungsabgriffs (8a bis 8e) mit einem Mittel zur Strömungsführung (9) versehen ist, das als ein kombiniertes Führungs- und Aussteifungselement (12) ausgebildet ist, welches aus einem Kanalelement (14), einem in dem Kanalelement (14) angeordneten Umlenkelement (10) und mindestens einem von dem Kanalelement (14) gegen den Grundkörper (2) abgestützten Aussteifungselement (16) gebildet ist.

2. Bauteil nach Anspruch 1, bei dem das Mittel (9) zur Strömungsführung als ein Glättungselement (11) ausgebildet ist.

3. Bauteil nach Anspruch 1 oder 2, bei dem das Mittel (9) zur Strömungsführung, insbesondere das Glättungselement (11) aus einer Kunststoffstruktur (K) variierender Dicke gebildet ist.

4. Bauteil nach Anspruch 3, bei dem die Kunststoffstruktur (K) eine Dicke von 0,1 mm bis 10 mm aufweist.

5. Bauteil nach Anspruch 3 oder 4, bei dem die Kunststoffstruktur (K) zumindest teilweise mehrschichtig, insbesondere aus einer Hart-Weich-Schichtenkombination, ausgeführt ist.

6. Bauteil nach einem der Ansprüche 3 bis 5, bei dem das Glättungselement (11) durch eine gewölbte Verdickung der Kunststoffstruktur (K) gebildet ist.

7. Bauteil nach einem der Ansprüche 1 bis 6, bei dem das Mittel (9) zur Strömungsführung als ein Umlenkelement (10) ausgebildet ist.

8. Bauteil nach einem der Ansprüche 1 bis 7, bei dem das Umlenkelement (10) sich aus einer innenwandigen Kunststoffschicht bogenförmig in den Hohlraum des Grundkörpers (2) erstreckt.

9. Bauteil nach Anspruch 7 oder 8, bei dem das Umlenkelement (10) separat ausgebildet ist und an die Kunststoffschicht angefügt ist.

10. Bauteil nach einem der Ansprüche 7 bis 9, bei dem das Umlenkelement (10) einstückig mit der Kunststoffauskleidung ausgebildet ist.

11. Bauteil nach einem der Ansprüche 7 bis 10, bei dem mehrere Umlenkelemente (10) in Längsrichtung gesehen parallel nebeneinander angeordnet sind.

12. Bauteil nach einem der Ansprüche 1 bis 11, bei dem das Kanalelement (14) in Richtung des Strömungsabgriffs (8a bis 8e) gesehen einen abnehmenden Querschnitt aufweist.

13. Bauteil nach einem der Ansprüche 1 bis 12, bei dem das Umlenkelement (10) sich aus dem Kanalelement (14) bogenförmig erstreckt und dieses im Bereich des Strömungsabgriffs (8a bis 8e) endseitig des kombinierten Führungs- und Aussteifungselements (12) verschließt und in eine Öffnung (O) des Grundkörpers (2) mündet.

14. Bauteil nach einem der Ansprüche 1 bis 13, bei dem mehrere Aussteifungselemente (16) in Art von Querrippen im zwischen dem Kanalelement (14) und dem Grundkörper (2) gebildeten Hohlraum (H) angeordnet sind.

15. Bauteil nach Anspruch 14, bei dem der Winkel der Querrippen senkrecht zum Kanal (6) oder schräg mit einem Winkel von 0° bis +/- 60° verläuft.

16. Bauteil nach einem der Ansprüche 1 bis 15, bei dem das Mittel (9) zur Strömungsführung zumindest teilweise oder vollständig separat ausgebildet und in den Grundkörper (2) einfügbar ist.

17. Bauteil nach einem der Ansprüche 1 bis 16, bei dem mehrere Mittel (9) zur Strömungsführung, insbesondere ein Glättungselement (11), ein Umlenkelement (10) und/oder ein kombiniertes Führungs- und Aussteifungselement (12), in einem einzelnen Strömungsabgriff (8a bis 8e) angeordnet sind.

18. Bauteil nach einem der Ansprüche 1 bis 17, bei dem das Mittel (9) zur Strömungsführung im Bereich des Strömungsabgriffs (8a bis 8e) in eine Öffnung (O) des Grundkörpers (2) mündet.

19. Bauteil nach einem der Ansprüche 1 bis 18, bei dem der Grundkörper (2) in Längsrichtung gesehen mit mehreren voneinander beabstandeten Strömungsabgriffen (8a bis 8e) versehen ist.

20. Bauteil nach einem der Ansprüche 1 bis 19, bei dem der Grundkörper (2) in Querrichtung gesehen mit gegenüberliegenden Strömungsabgriffen (8a bis 8e) versehen ist.

21. Bauteil nach einem der Ansprüche 1 bis 20, bei dem der Grundkörper (2) zumindest partiell mit einer Kunststoffschicht versehen ist, insbesondere umspritzt oder umschäumt ist.

22. Bauteil nach einem der Ansprüche 1 bis 21, bei dem der Grundkörper (2) aus einem Metall, Leichtmetall oder dessen Legierungen, insbesondere Aluminium, Magnesium, Titan oder Feinstahl, gebildet ist und eine Wanddicke von 0,4 mm bis 2,0 mm aufweist.

23. Bauteil nach einem der Ansprüche 1 bis 22, bei dem der Grundkörper (2) eine bereichsweise variierende Wanddicke aufweist.

24. Bauteil nach einem der Ansprüche 1 bis 23, bei dem der Grundkörper (2) bereichsweise mit einem physikalisch oder chemisch geschäumten Material variierender Wanddicke ausgekleidet ist.

25. Verwendung eines Bauteils (1) nach einem der Ansprüche 1 bis 24 als Instrumententafelträger in einem Fahrzeug mit einem Kanal (6), insbesondere mit wenigstens einem Luftführungskanal und/oder einem Kabelkanal

26. Verwendung eines Bauteils (1) nach einem der Ansprüche 1 bis 24 als Querträger in einem Fahrzeug, insbesondere als Querträger zwischen den A-Säulen eines Fahrzeugs oder als ein Front-End-Bauteil.

27. Verwendung eines Bauteils (1) nach einem der Ansprüche 1 bis 24 als Strukturteil in einem Fahrzeug, insbesondere als Hohlstrukturteil, als Längsträger, Schweller, Mitteltunnelstruktur, Vorbau- Längs- oder -Querträger, Vertikalstrukturteil, A-, B-, C-, D-Säule oder Dachstrukturteil.

28. Verwendung eines Bauteils (1) nach einem der Ansprüche 1 bis 24 als Strukturteil in einem Fahrzeug, insbesondere als Hohlstrukturteil, durch welches Luft eines Heizungs-, Kühlungs-, Klimatisierungs- oder Belüftungs-Gerätes geführt wird.

## Claims

1. A structural element (1), particularly a hybrid structural element, for a cross member of a vehicle, comprising a base body (2) at least partially lined with plastic (4), which is provided with at least one flow tap (8a to 8e), **characterised in that** the base body (2) is provided, in the area of the flow tap (8a to 8e), with a flow-guiding means (9), which is a combined guiding and reinforcing element (12), wherein the combined guiding and reinforcing element (12) is formed by a channel element (14), a deflection element (10) arranged in the channel element (14), and at least one reinforcing element (16) supported by the channel element (14) against the base body (2).

2. The structural element as claimed in claim 1, in which the flow-guiding means (9) is a smoothing element (11).

3. The structural element as claimed in claims 1 or 2, in which the flow-guiding means (9), in particular the smoothing element (11), is a plastic structure (K) of varying thickness.

4. The structural element as claimed in claim 3, in which the plastic structure (K) has a thickness of 0.1 mm to 10 mm.

5. The structural element as claimed in claims 3 or 4, in which the plastic structure (K) is, at least partially, made in a multi-layered fashion, and in particular from a combination of hard and soft layers.

6. The structural element as claimed in any one of claims 3 to 5, in which the smoothing element (11) is formed by an arched thickening of the plastic structure (K).

7. The structural element as claimed in any one of claims 1 to 6, in which the flow-guiding means (9) is a deflection element (10).

8. The structural element as claimed in any one of claims 1 to 7, in which the deflection element (10) extends from a layer of plastic on the inner wall in the form of an are into the cavity of the base body (2).

9. The structural element as claimed in claims 7 or 8, in which the deflection element (10) is made separately and joined to the plastic layer.

10. The structural element as claimed in any one of claims 7 to 9, in which the deflection element (10) is made in a single piece with the plastic lining.

11. The structural element as claimed in any one of claims 7 to 10, in which a plurality of deflection elements (10) are arranged parallel next to one another viewed in the longitudinal direction.

12. The structural element as claimed in any one of claims 1 to 11, in which the channel element (14) has a reducing cross section viewed in the direction of the flow tap (8a to 8e).

13. The structural element as claimed in any one of claims 1 to 12, in which the deflection element (10) extends from the channel element (14) in the form of an arc and closes this in the vicinity of the flow tap (8a to 8e) at the end of the combined guiding and reinforcing element (12) and discharges into an opening (0) in the base body (2).

14. The structural element as claimed in any one of claims 1 to 13, in which a plurality of reinforcing elements (16) are arranged in the form of transverse ribs in the cavity (H) formed between the channel element (14) and the base body (2).

15. The structural element as claimed in claim 14, in which the angle of the transverse ribs runs perpendicular to the channel (6) or obliquely at an angle of 0° to ± 60°.

16. The structural element as claimed in any one of claims 1 to 15, in which the flow-guiding means (9) is formed at least partially or completely separately and is capable of being introduced into the base body (2).

17. The structural element as claimed in any one of claims 1 to 16, in which a plurality of flow-guiding means (9), in particular a smoothing element (11), a deflection element (10) and/or a combined guiding and reinforcing element (12), are arranged in a single flow tap (8a to 8e).

18. The structural element as claimed in any one of claims 1 to 17, in which the flow-guiding means (9) discharges in the vicinity of the flow tap (8a to 8e) into an opening (0) in the base body (2).

19. The structural element as claimed in any one of claims 1 to 18, in which the base body (2) viewed in the longitudinal direction is provided with a plurality of flow taps (8a to 8e) situated at a distance from one another.

20. The structural element as claimed in any one of claims 1 to 19, in which the base body (2) viewed in the transverse direction is provided with opposing flow taps (8a to 8e).

21. The structural element as claimed in any one of claims 1 to 20, in which the base body (2) is provided at least partially with a plastic layer, and in particular is extrusion-coated or foam-coated.

22. The structural element as claimed in any one of claims 1 to 21, in which the base body (2) is made of metal, light metal or its alloys, and in particular aluminium, magnesium, titanium or refined steel, and exhibits a wall thickness from 0.4 mm to 2.0 mm.

23. The structural element as claimed in any one of claims 1 to 22, in which the base body (2) has a wall thickness that varies in different areas.

24. The structural element as claimed in any one of claims 1 to 23, in which the base body (2) is lined in areas with a material of varying wall thickness that has been caused to foam by physical or chemical means.

25. Use of a structural element (1) as claimed in any one of claims 1 to 24 as an instrument panel supporting member in a vehicle with a channel (6), in particular with at least one air guiding channel and/or a cable duct.

26. The use of a structural element (1) as claimed in any one of claims 1, to 24 as a cross member in a vehicle, in particular as a cross member between the A-pillars of a vehicle or as a front-end structural member.

27. The use of a structural element (1) as claimed in any one of claims 1 to 24 as a structural element in a vehicle, in particular as a hollow structural element, as a longitudinal member, sill, center tunnel structure, front, side or transverse member, vertical structural element, A-, B-, C-, D-pillar, or roof structural element.

28. The use of a structural element as claimed in any one of claims 1 to 24 as a structural element in a vehicle, in particular as a hollow structural element, through which the air for a heating, cooling, air conditioning or ventilation device is conducted.

## Revendications

1. Pièce de structure (1), en particulier pièce de structure hybride, pour un support d'un véhicule, comprenant un corps de base (2) recouvert au moins partiellement de matière plastique (4), corps de base qui est doté au moins d'un captage d'écoulement (8a à 8e),
**caractérisée en ce que** le corps de base (2), dans la zone du captage d'écoulement (8a à 8e), est doté d'un moyen servant au guidage (9) de l'écoulement, moyen qui est configuré comme un élément combiné (12) de guidage et de renfort qui est formé par un élément de conduit (14), par un élément déflecteur (10) disposé dans l'élément de conduit (14) et au moins par un élément de renfort (16) supporté par l'élément de conduit (14), contre le corps de base (2).

2. Pièce de structure selon la revendication 1, dans laquelle le moyen (9) servant au guidage de l'écoulement est configuré comme un élément de lissage (11).

3. Pièce de structure selon la revendication 1 ou 2, dans laquelle le moyen (9) servant au guidage de l'écoulement, en particulier l'élément de lissage (11), est formé par une structure (K) en matière plastique, d'épaisseur variable.

4. Pièce de structure selon la revendication 3, dans laquelle la structure (K) en matière plastique présente une épaisseur comprise entre 0,1 mm et 10 mm.

5. Pièce de structure selon la revendication 3 ou 4, dans laquelle la structure (K) en matière plastique est réalisée, au moins partiellement, en plusieurs couches, en particulier suivant une combinaison de couches dures et souples.

6. Pièce de structure selon l'une quelconque des revendications 3 à 5, dans laquelle l'élément de lissage (11) est formé par un épaississement bombé de la structure (K) en matière plastique.

7. Pièce de structure selon l'une quelconque des revendications 1 à 6, dans laquelle le moyen (9) servant au guidage de l'écoulement est configuré comme un élément déflecteur (10).

8. Pièce de structure selon l'une quelconque des revendications 1 à 7, dans laquelle l'élément déflecteur (10) s'étend de façon arquée dans l'espace creux du corps de base (2), à partir d'une couche de matière plastique à paroi intérieure.

9. Pièce de structure selon la revendication 7 ou 8, dans laquelle l'élément déflecteur (10) est configuré séparément et est jointé à la couche de matière plastique.

10. Pièce de structure selon l'une quelconque des revendications 7 à 9, dans laquelle l'élément déflecteur (10) est configuré en formant une seule et même pièce avec le revêtement en matière plastique.

11. Pièce de structure selon l'une quelconque des revendications 7 à 10, dans laquelle plusieurs éléments déflecteurs (10), vus dans le sens longitudinal, sont disposés parallèlement les uns à côté des autres.

12. Pièce de structure selon l'une quelconque des revendications 1 à 11, dans laquelle l'élément de conduit (14), vu dans le sens du captage d'écoulement (8a à 8e), présente une section qui diminue.

13. Pièce de structure selon l'une quelconque des revendications 1 à 12, dans laquelle l'élément déflecteur (10) s'étend de façon arquée à partir de l'élément de conduit (14) et cet élément déflecteur se ferme dans la zone du captage d'écoulement (8a à 8e), côté extrémité de l'élément combiné (12) de guidage et de renfort et débouche dans une ouverture (0) du corps de base (2).

14. Pièce de structure selon l'une quelconque des revendications 1 à 13, dans laquelle plusieurs éléments de renfort (16) sont disposés à la façon d'ailettes transversales dans l'espace creux (H) formé entre l'élément de conduit (14) et le corps de base (2).

15. Pièce de structure selon la revendication 14, dans laquelle l'angle des ailettes transversales s'étend perpendiculairement au conduit (6), ou bien de façon inclinée en formant un angle compris entre 0° et ± 60°.

16. Pièce de structure selon l'une quelconque des revendications 1 à 15, dans laquelle le moyen (9) servant au guidage de l'écoulement est configuré séparément, au moins de façon partielle ou complète, et peut être inséré dans le corps de base (2).

17. Pièce de structure selon l'une quelconque des revendications 1 à 16, dans laquelle plusieurs moyens (9) servant au guidage de l'écoulement, en particulier un élément de lissage (11), un élément déflecteur (10) et / ou un élément combiné (12) de guidage et de renfort, sont disposés dans un captage d'écoulement individuel (8a à 8e).

18. Pièce de structure selon l'une quelconque des revendications 1 à 17, dans laquelle le moyen (9) servant au guidage de l'écoulement débouche dans une ouverture (0) du corps de base (2), située dans la zone du captage d'écoulement (8a à 8e).

19. Pièce de structure selon l'une quelconque des revendications 1 à 18, dans laquelle le corps de base (2), vu dans le sens longitudinal, est doté de plusieurs captages d'écoulement (8a à 8e) espacés les uns des autres.

20. Pièce de structure selon l'une quelconque des revendications 1 à 19, dans laquelle le corps de base (2), vu dans le sens transversal, est doté de captages d'écoulement (8a à 8e) qui se font face.

21. Pièce de structure selon l'une quelconque des revendications 1 à 20, dans laquelle le corps de base (2) est doté, au moins partiellement, d'une couche de matière plastique, en particulier est enrobé de matière plastique moulée par injection ou enrobé de mousse thermoplastique.

22. Pièce de structure selon l'une quelconque des revendications 1 à 21, dans laquelle le corps de base (2) est formé par un métal, un métal léger ou par ses alliages, en particulier par de l'aluminium, du magnésium, du titane ou par un acier fin, et présente une épaisseur de paroi comprise entre 0,4 mm et 2,0 mm.

23. Pièce de structure selon l'une quelconque des revendications 1 à 22, dans laquelle le corps de base (2) présente une épaisseur de paroi qui varie par zones.

24. Pièce de structure selon l'une quelconque des revendications 1 à 23, dans laquelle le corps de base (2) est recouvert, par zones, d'une matière physiquement ou chimiquement expansée, à épaisseur de paroi variable.

25. Utilisation d'une pièce de structure (1) selon l'une quelconque des revendications 1 à 24, comme support de tableau de bord dans un véhicule, comprenant un conduit (6), en particulier comprenant au moins un conduit de guidage d'air et / ou une conduite de câbles.

26. Utilisation d'une pièce de structure (1) selon l'une quelconque des revendications 1 à 24, comme traverse dans un véhicule, en particulier comme traverse entre les colonnes A d'un véhicule ou comme pièce de structure de la partie avant.

27. Utilisation d'une pièce de structure (1) selon l'une quelconque des revendications 1 à 24, comme élément structurel dans un véhicule, en particulier comme élément structurel creux, comme longeron, seuil de porte, structure de tunnel central, longeron ou traverse de la partie avant, élément structurel vertical, colonne A, B, C, D ou élément structurel du toit.

28. Utilisation d'une pièce de structure (1) selon l'une quelconque des revendications 1 à 24, comme élément structurel dans un véhicule, en particulier comme élément structurel creux dans lequel est guidé de l'air traversant un système de chauffage, de refroidissement, de climatisation ou de ventilation.
